# EUROPÄISCHE PATENTSCHRIFT

(11) **EP 2 558 314 B1**
(45) Veröffentlichungstag und Bekanntmachung des Hinweises auf die Patenterteilung: **18.02.2015**
(21) Anmeldenummer: 12715682.6
(22) Anmeldetag: 12.04.2012
(51) Int. Cl.: B60J 7/22

(54) **WINDABWEISERANORDNUNG**
WIND DEFLECTOR ASSEMBLY
ENSEMBLE DÉFLECTEUR D'AIR

(30) Priorität: 10.06.2011 DE 102011103980
(43) Veröffentlichungstag der Anmeldung: 20.02.2013
(73) Patentinhaber: Webasto SE, 82131 Stockdorf (DE)
(72) Erfinder: NOWACK, Tobias, 81377 München (DE); KIRSCH, Alexander, 82069 Hohenschäftlarn (DE); ELBS, Norbert, 80797 München (DE); MECH, Tobias, 82346 Andechs-Machtifing (DE)
(74) Vertreter: Epping - Hermann - Fischer
(86) Internationale Anmeldenummer: PCT/EP2012/056676
(87) Internationale Veröffentlichungsnummer: WO 2012/167976

(56) Entgegenhaltungen:
- DE-U1-202006 002 018
- JP-A- 2004 168 241
- JP-A- 2008 247 093

## Beschreibung

Die Erfindung betrifft eine Windabweiseranordnung für eine durch eine Abdeckung verschließ- und freigebbare Dachöffnung in einer Dachhaut eines Kraftfahrzeugs.

Windabweiseranordnungen weisen häufig viele verschiedene mechanische Bauteile auf, die einen relativ hohen Platzbedarf haben. Die Realisierung eines Windabweisers mit einer elektrischen Ansteuerung ist aufgrund der Vielzahl der erforderlichen Bauteile in der Regel kostenintensiv. Darüber hinaus können bei einer Betätigung der Mechanik der Windabweiseranordnung zur Beeinflussung der Luftströmung im Bereich der Dachöffnung des Fahrzeugs Geräusche auftreten, für deren Dämpfung wiederum weitere Bauteile erforderlich sein können. Des Weiteren können energetische Verluste durch Umlenkungen an den mechanischen Bauteilen entstehen.

Die US 7,878,582 B2 zeigt einen Antrieb für einen Windabweiser, bei dem eine Rotationsbewegung des Antriebs in eine lineare Bewegung des Windabweisers umgewandelt wird.

Die DE 102 55 565 B3 beschreibt eine Ausstellvorrichtung für Kraftfahrzeugdächer, die drei miteinander schwenkbar verbundene Hebel zum Aufstellen eines Dachteils aufweist.

Die JP 2008 24 7093 A offenbart eine Windabweiseranordnung gemäß dem Oberbegriff des Anspruchs 1.

Es ist wünschenswert, eine Windabweiseranordnung anzugeben, die sowohl einen geringen Platzbedarf als auch einen hohen Ausfahrwinkel hat. Zudem ist es wünschenswert, dass eine einfache, raumsparende Bauweise bei niedrigen Kosten ermöglicht ist.

In einer Ausführungsform der Erfindung umfasst eine Windabweiseranordnung für eine durch eine Abdeckung verschließ- und freiggebare Dachöffnung in einer Dachhaut eines Fahrzeugs einen Rahmen, der ausgebildet ist, die Dachöffnung zumindest teilweise zu umgeben. Die Windabweiseranordnung umfasst weiterhin einen Windabweiserbügel, der mit dem Rahmen gekoppelt ist, so dass der Windabweiserbügel um eine erste Drehachse relativ zum Rahmen und der Dachhaut drehbar ist. Die Windabweiseranordnung umfasst weiterhin ein Stützelement, das mit dem Windabweiserbügel und dem Rahmen gekoppelt ist, so dass das Stützelement während einem ersten Abschnitt einer Bewegung des Windabweiserbügels relativ zu dem Rahmen um eine zweite Drehachse drehbar ist und während einem weiteren Abschnitt der Bewegung um eine dritte Drehachse drehbar ist, die von der zweiten Drehachse verschieden ist. Die zweite Drehachse ist festgelegt durch eine Kulisse, die an dem Rahmen angeordnet ist, und einem vorspringendem Bereich des Stützelements, der in der Kulisse führbar ist. Die Kulisse ist in eine Richtung offen, so dass der vorspringende Bereich in die Kulisse aus- und einkoppelbar ist.

Dadurch, dass sich das Stützelement während der Bewegung des Windabweiserbügels relativ zu dem Rahmen um zwei unterschiedliche Drehachsen dreht, ist die Windabweiseranordnung mit einem geringen Bauraumbedarf realisierbar und der Windabweiserbügel weist einen großen Aufstellwinkel mit dem Rahmen auf, wenn er ausgeklappt ist.

Der Windabweiserbügel ist in einer ersten Position, in der die Dachöffnung verschlossen ist, im Wesentlichen parallel zu dem Rahmen und damit zur Dachhaut angeordnet. In Ausführungsformen ist der Windabweiserbügel in der ersten Position in Richtung des Inneren des Kraftfahrzeugs geneigt. Der Windabweiserbügel ist in einer zweiten Position, wenn die Dachöffnung freigegeben ist, relativ zum Rahmen und damit zur Dachhaut um die erste Drehachse gedreht, so dass der Windabweiserbügel mit dem Rahmen einen vorgegebenen Winkel aufweist. Der Scheitelpunkt des Winkels liegt auf der Drehachse. Der Windabweiserbügel ist in der zweiten Position weg von dem Inneren des Kraftfahrzeugs geneigt.

Der Windabweiserbügel ist zwischen der ersten Position und der zweiten Position bewegbar. Der erste Abschnitt der Bewegung beginnt oder endet in der ersten Position. Der zweite Abschnitt der Bewegung endet oder beginnt an der zweiten Position des Windabweiserbügels.

Während dem ersten Abschnitt der Bewegung, in dem der Windabweiserbügel im Wesentlichen parallel zum Rahmen ist und so bewegbar ist, dass der Winkel zwischen dem Rahmen und dem Windabweiserbügel bis zu einem vorgegebenen Wert zunimmt, dreht sich das Stützelement um die zweite Drehachse. Somit wird ein Hebelarm erzeugt, so dass der Windabweiser durch eine geringe Kraft antreibbar ist.

In Ausführungsformen dreht sich das Stützelement während dem ersten Abschnitt der Bewegung um die zweite Drehachse, wobei der Windabweiserbügel beginnend in der ersten Position, die hin zum Inneren des Kraffahrzeugs geneigt ist, so bewegt wird, dass der Winkel zwischen dem Rahmen und dem Windabweiserbügel bis zu einem vorgegebenen Wert abnimmt bis der Windabweiserbügel im Wesentlichen parallel zu dem Rahmen und damit zur Dachhaut angeordnet ist. Somit wird ein Hebelarm erzeugt, so dass der Windabweiser durch eine geringe Kraft antreibbar ist.

Während dem zweiten Abschnitt der Bewegung, zwischen dem vorgegebenen Wert des Winkels und der zweiten Position, dreht das Stützelement um die dritte Drehachse. Diese ist relativ zu der zweiten und der ersten Drehachse so angeordnet, dass sich ein großer Wert für den Winkel in der zweiten Position realisieren lässt. Dadurch, dass der Windabweiser während der Bewegung in die zweite Position mit dem Rahmen bereits mindestens den vorgegebenen Wert des Winkels einschließt, ist bereits ein ausreichender Hebelarm realisiert.

Die zweite Drehachse ist entlang der Dachhaut weiter von der ersten Drehachse entfernt als die dritte Drehachse. Die zweite und die dritte Drehachse weisen einen geringeren Abstand zueinander auf als die erste Drehachse und die zweite Drehachse. Die zweite und die dritte Drehachse weisen einen geringeren Abstand zueinander auf als die erste Drehachse und die dritte Drehachse. Die zweite Drehachse ist insbesondere relativ zu dem Rahmen bewegbar. Insbesondere ist die zweite Drehachse quer zu einer Hauptausdehnungsfläche der Dachhaut beweglich. Die dritte Drehachse ist relativ zu dem Rahmen bewegbar. Insbesondere ist die dritte Drehachse entlang der Hauptausbreitungsfläche der Dachhaut entlang des Rahmens bewegbar.

Gemäß weiteren Aspekten ist die erste Drehachse durch ein Drehgelenk festgelegt, das den Rahmen und den Windabweiserbügel miteinander koppelt. So ist eine einfache, raumsparende Bauweise realisiert.

Dadurch, dass die zweite Drehachse durch eine Kulisse festgelegt ist, die an dem Rahmen angeordnet ist, und einen korrespondierenden Vorsprung des Stützelements, der während dem ersten Abschnitt der Bewegung in der Kulisse geführt ist, ist eine einfache, raumsparende Bauweise realisiert.

Gemäß weiteren Aspekten ist die dritte Drehachse festgelegt durch ein Drehgelenk, das das Stützelement und den Rahmen miteinander koppelt. So ist eine einfache, raumsparende Bauweise realisiert.

Gemäß weiteren Aspekten sind das Stützelement und der Windabweiserbügel mittels eines Drehgelenks miteinander gekoppelt. So ist eine einfache, raumsparende Bauweise realisiert. Gemäß weiteren Aspekten umfasst die Windabweiseranordnung eine Feder, die mit dem Rahmen und dem Windabweiserbügel gekoppelt ist. Die Feder ist eingerichtet, eine Federkraft auf den Windabweiserbügel auszuwirken. Insbesondere wird die Bewegung des Windabweiserbügels relativ zu dem Rahmen durch die Kraft der Feder angetrieben. Dadurch, dass der Windabweiserbügel in dem ersten Abschnitt der Bewegung um die zweite Drehachse drehbar ist, reicht eine geringe Federkraft aus, um den Windabweiserbügel zu bewegen, da durch die Anordnung der zweiten Drehachse relativ zu der ersten und der dritten Drehachse eine gute Hebelwirkung realisiert ist. Die Feder ist eingerichtet, eine Zugkraft auf den Windabweiserbügel auszuwirken. So ist eine einfache, raumsparende Bauweise realisiert.

### Kurze Beschreibung der Zeichnungen

Weitere Vorteile, Merkmale und Weiterbildungen ergeben sich aus den nachfolgenden in Verbindung mit den Figuren erläuterten Beispielen. Gleiche, gleichartige und gleichwirkende Elemente können in den Figuren mit den gleichen Bezugszeichen versehen sein. Die dargestellten Elemente und deren Größen-Verhältnisse zueinander sind grundsätzlich nicht als maßstabsgerecht anzusehen, vielmehr können einzelne Elemente, wie beispielsweise Bereiche, zum besseren Verständnis übertrieben groß dimensioniert dargestellt sein.

Es zeigen:
- Figur 1: eine schematische Darstellung einer Windabweiseranordnung gemäß einer Ausführungsform,
- Figur 2: eine schematische Darstellung der Windabweiseranordnung der Figur 1 aus einem anderen Blickwinkel,
- Figur 3: eine schematische Darstellung der Windabweiseranordnung der Figur 1 aus einem weiteren Blickwinkel,
- Figur 4: eine schematische Detaildarstellung der Kulisse,
- Figur 5: eine schematische Darstellung der dritten Drehachse.

### Detaillierte Beschreibung von Ausführungsformen

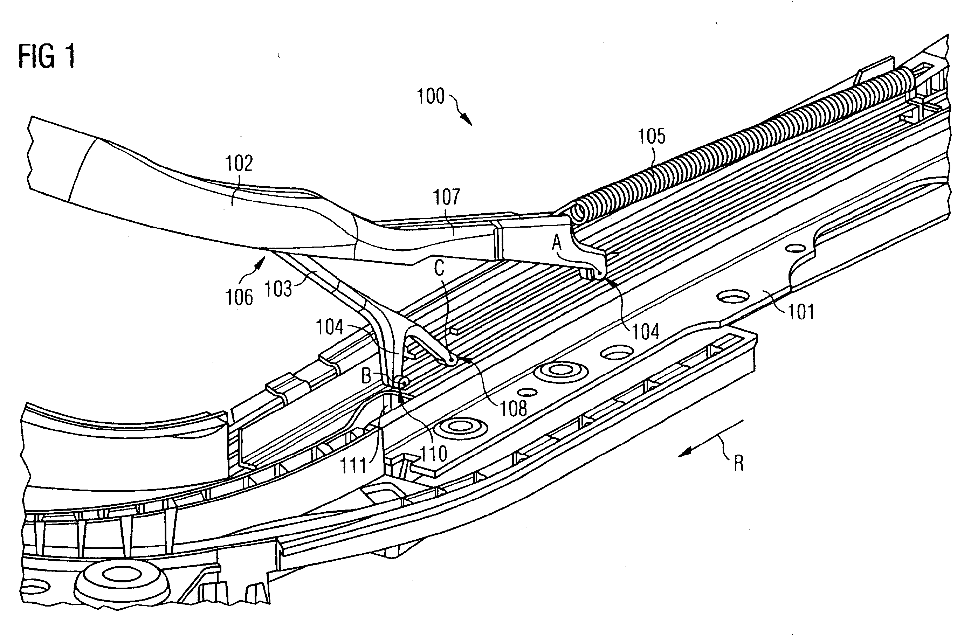

Figur 1 zeigt eine Windabweiseranordnung 100. Die Windabweiseranordnung 100 ist eingerichtet zur Beeinflussung der Luftströmung im Bereich einer Dachöffnung eines Fahrzeugs. Die Windabweiseranordnung umfasst einen Rahmen 101. Die Windabweiseranordnung 100 umfasst weiterhin einen Windabweiserbügel 102 und ein Stützelement 103. Die Windabweiseranordnung ist mit dem Rahmen 101 mit einer Dachhaut des Kraftfahrzeugs koppelbar. Der Rahmen 101 umgibt im eingebauten Zustand die Dachöffnung zumindest teilweise. Die Dachöffnung ist durch eine Abdeckung verschließ- und freigebbar, beispielsweise durch ein Schiebedach des Kraftfahrzeugs. Der Rahmen ist im eingebauten Zustand insbesondere in Richtung der Hauptfahrtrichtung des Kraftfahrzeugs an der Dachöffnung angebracht. In weiteren Ausführungsformen umgibt der Rahmen 101 die Dachöffnung vollständig.

In einem bezüglich einer Hauptfahrtrichtung R des Fahrzeugs vorderen Randbereich der Dachöffnung ist der Windabweiserbügel 102 angeordnet. Dieser ist gegenüber dem Dachbereich zwischen einer abgesenkten Position und einer aufgestellten Position schwenkbar gelagert.

Der Windabweiserbügel 102 weist ein parallel zu dem vorderen Randbereich des Rahmens ausgerichtetes Windabweiserblatt und zwei seitlich angeordnete Windabweiserflanken 107 auf. Die Windabweiserflanken 107 sind um eine in Dachquerrichtung verlaufende Drehachse A schwenkbar gelagert. In einer abgesenkten Position taucht das Windabweiserblatt unter das Schiebedach in einen von dem Rahmen 101 abgegrenzten Raum. In einer voll ausgestellten Position (siehe Figur 1) ist das Windabweiserblatt oberhalb der Ebene des Dachbereichs beziehungsweise der Dachhaut angeordnet.

Der Windabweiserbügel 102 weist eine U-Form auf. Die beiden Flanken 107 des Windabweiserbügels sind jeweils mittels eines Drehgelenks 104 mit dem Rahmen 101 gekoppelt. Die Drehachse A verläuft durch die beiden Drehgelenke 104.

Der Windabweiserbügel 102 ist mit einer Feder 105 gekoppelt. Insbesondere ist der Windabweiserbügel 102 in einer dem Drehgelenk 104 zugewandten Region der Flanke 107 mit einem Ende der Feder 105 gekoppelt. Das andere Ende der Feder 105 ist mit dem Rahmen 101 gekoppelt.

Die Feder 105 ist insbesondere eine Spiralfeder und ist eingerichtet und so vorgespannt, dass sie in betriebsfertigem Zustand eine Zugkraft auf den Windabweiserbügel 102 auswirkt. Bei einem Öffnen des Schiebedachs werden die Windabweiserflanken 107 durch das Schiebedach freigegeben, so dass der Windabweiserbügel 102 nach oben verschwenkt werden kann. Das Verschwenken des Windabweiserbügels 102 wird durch die Federkraft der Feder 105 verursacht.

Das Stützelement 103 ist mittels eines weiteren Drehgelenks 106 mit dem Windabweiserbügel 102 gekoppelt. Die Windabweiseranordnung weist zwei Stützelemente 103 auf, die jeweils an einer der Flanken 103 angeordnet sind. Der Aufbau und die Funktion der beiden Stützelemente 103 sind vergleichbar, so dass lediglich eines der Stützelemente 103 beschrieben wird. Der Aufbau und die Funktionsweise sind auf das zweite Stützelement übertragbar.

Das Stützelement 103 ist mittels eines weiteren Drehgelenks 108 mit dem Rahmen 101 gekoppelt. Das Stützelement erstreckt sich zwischen den beiden Drehgelenken 106 und 108 länglich ausgedehnt. Das Stützelement 103 weist einen Abschnitt 109 auf, der schräg zu der länglichen Ausdehnung des Stützelements 103 zwischen den Drehgelenken 106 und 108 hervorspringt. An dem Bereich 109 ist ein weiterer vorspringender Bereich 110, beispielsweise ein Zapfen, angeordnet, der in eine Kulisse 111 des Rahmens 101 einführbar ist.

Wenn der vorspringende Bereich 110 in der Kulisse 111 geführt ist, ist eine quer zu der flächigen Hauptausdehnung der Dachhaut bewegliche Drehachse B gebildet. Die Kulisse 111 ist quer zu der Hauptausbreitungsrichtung des Rahmens 101 ausgerichtet und in Richtung des Windabweiserbügels 102 offen, so dass der vorspringende Bereich 110 die Kulisse 111 verlassen und in die Kulisse 111 einkoppeln kann. Die Kulisse 111 ist quer zu der Hauptfahrrichtung R ausgerichtet

Der Windabweiserbügel 102 ist in der Figur 1 in einer zweiten Position relativ zum Rahmen 101 dargestellt, in der die Dachöffnung freigegeben ist. Das Schiebedach ist geöffnet. Wird das Schiebedach geschlossen und die Dachöffnung verschlossen, bewegt sich der Windabweiserbügel um die Drehgelenke 104 in Richtung des Rahmens 101. Das Stützelement 103 dreht sich dabei um das Drehgelenk 108 und eine von den Drehgelenken 108 festgelegte Drehachse C, bis der Winkel zwischen dem Windabweiserbügel 102 und dem Rahmen 101, dessen Scheitelpunkt im Drehgelenk 104 liegt, einen vorgegebenen Wert unterschreitet.

Unterschreitet der Winkel den vorgegebenen Wert, koppelt der vorspringende Bereich 110 des Stützelements 103 in die Kulisse 111 ein. Bewegt sich der Windabweiserbügel 102 weiter in Richtung des Rahmens 101, dreht sich das Stützelement 102 vorrangig um die Drehachse B, die von dem vorspringenden Bereich 110 und der Kulisse 111 vorgegeben wird. Die Drehung des Stützelements 103 relativ zum Rahmen 101 wird durch den vorspringenden Bereich 110 und die Kulisse 111 bestimmt. Ist die Dachöffnung vollständig verschlossen, ist der Windabweiserbügel in einer ersten Position angeordnet, in der der Windabweiserrahmen 102 und insbesondere die Flanken 107 im Wesentlichen parallel zum Rahmen 101 angeordnet sind.

Beim Öffnen der Dachöffnung wird der Windabweiserbügel 102 durch die Federkraft der Feder 105 um die Drehgelenke 104 von dem Rahmen 101 wegbewegt. Am Anfang der Bewegung während eines ersten Abschnitts der Bewegung ist der vorspringende Bereich 110 in der Kulisse 111 geführt, so dass ein günstiger Hebelarm gebildet ist. Dadurch ist eine geringe Federkraft 105 ausreichend um den Windabweiserbügel 102 von dem Rahmen 101 um die Drehgelenke 104 zu drehen. Die Drehachse C, die durch die Kulisse 111 und den vorspringenden Bereich 110 für das Stützelement 103 gebildet ist, ist relativ zu dem Drehgelenk 104 und dem Drehgelenk 106 so angeordnet, dass die Kraft der Feder 105 auf den Windabweiserbügel 102 durch die resultierende Hebelwirkung verstärkt wird.

Ist der vorgegebene Wert für den Winkel zwischen dem Windabweiserbügel 102 und dem Rahmen 101 erreicht, verlässt der vorspringende Bereich 110 die Kulisse 111, so dass die Bewegung des vorspringenden Bereichs 110 nicht mehr durch die Kulisse 111 eingeschränkt wird. Die Bewegung des Stützelements 103 wird nachfolgend während eines zweiten Abschnitts der Bewegung durch das Drehgelenk 108 und das Drehgelenk 106 bestimmt. Das Drehgelenk 108 ist relativ zu dem Drehgelenk 104 und dem Drehgelenk 106 so angeordnet, dass sich ein großer Winkel zwischen dem Windabweiserbügel 102 und dem Rahmen 101 bei vorgegebenen Baugrößen ergibt, wenn der Windabweiserbügel in der zweiten Position angeordnet ist.

Dadurch, dass die Bewegung des Stützelements 103 relativ zu dem Rahmen 101 und dem Windabweiserbügel 102 zu unterschiedlichen Zeitpunkten beziehungsweise Abschnitten der Bewegung des Windabweiserbügels 102 relativ zum Rahmen 101 und damit zu unterschiedlichen Winkeln zwischen dem Windabweiserbügel 102 und dem Rahmen 101 von einer der beiden unterschiedlichen Drehachsen B beziehungsweise C bestimmt ist, ist sowohl eine große maximale Anordnung des Windabweiserbügels 102 weg vom Rahmen 101 möglich als auch ein relativ geringer Bauraumbedarf realisiert.

Die Bewegung des Stützelements 103 relativ zum Rahmen 101 ist in dem ersten Abschnitt der Bewegung durch die bewegliche Drehachse B bestimmt. Im Übergang zu dem zweiten Abschnitt der Bewegung koppelt der vorspringende Bereich 110 aus der Kulisse 111 aus und die Drehung wird von der Drehachse C bestimmt, die an einer anderen Stelle an dem Stützelement 103 angeordnet ist, als die Drehachse B. Die Drehachse B ist quer zu der Richtung R verschiebbar. Die Drehachse B ist nicht entlang der Richtung R verschiebbar.

Die Drehachse C ist nicht quer zu der Richtung R verschiebbar. Die Drehachse C ist während dem ersten Abschnitt der Bewegung entlang der Richtung R verschiebbar. Wenn der vorspringende Bereich 110 die Kulisse 111 verläst, schlägt das Stützelement 103 in negativer Richtung R gegen einen Anschlag des Rahmens 101, so dass sich die Drehachse C nicht weiter verschiebt. Die Drehachse des Stützelements 103 ist während des zweiten Abschnitts der Bewegung an einem Ende des Stützelements 103 angeordnet, das mit dem Rahmen 101 gekoppelt ist.

In weiteren Ausführungsformen schlägt der Windabweiserbügel 102 in negativer Richtung R gegen einen Anschlag des Rahmens 101, so dass sich die Drehachse C nicht weiter verschiebt, wenn der vorspringende Bereich 110 die Kulisse 111 verlässt. Die Drehachse des Windabweiserbügels 102 ist während des zweiten Abschnitts der Bewegung an einem Ende der Flanken 107 angeordnet, die mit dem Rahmen 101 gekoppelt sind.

Im ersten Abschnitt der Bewegung kippen der Windabweiserbügel 102 und das Stützelement 103 gemeinsam relativ zu dem Rahmen 101 um die Drehachse B und gleichzeitig ist der Windabweiserbügel 102 durch das Drehgelenk 104 im Rahmen 101 geführt.

Im zweiten Abschnitt der Bewegung kippen der Windabweiserbügel 102 und das Stützelement 103 gemeinsam relativ zu dem Rahmen 101 um die Drehachse B und gleichzeitig ist der Windabweiserbügel 102 durch das Drehgelenk 104 im Rahmen 101 geführt. In weiteren Ausführungsformen kippt der Windabweiserbügel 102 relativ zu dem Rahmen 101 um die Drehachse C.

Die Drehgelenke 104 und 108 sind jeweils so ausgebildet, dass die zugehörige Drehachse A beziehungsweise B quer zur Richtung R verläuft ist. Die Kulisse 111 und der vorspringende Bereich 110 sind so ausgebildet, dass die Drehachse C quer zur Richtung R verläuft ist.

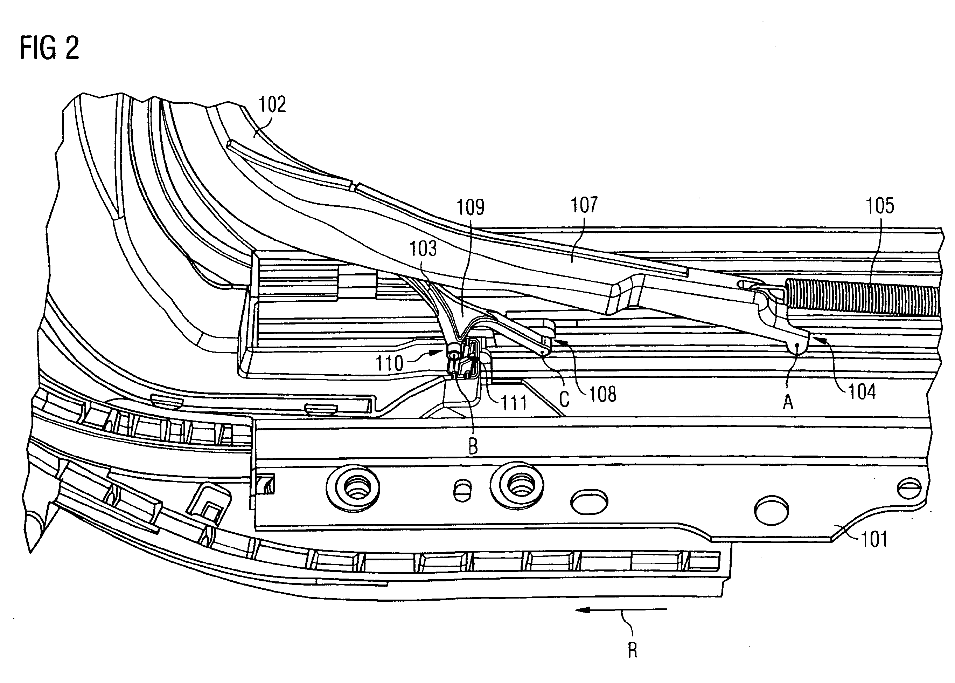

Figur 2 zeigt eine schematische Darstellung der Windabweiseranordnung 100 der Figur 1 aus einem anderen Blickwinkel. Das Drehgelenk 108 ist relativ zu dem Rahmen 101 beweglich. Insbesondere ist das Drehgelenk 108 entlang der Hauptausdehnung der Flanken 107 des Windabweiserbügels 102 bewegbar. Das Drehgelenk 108 ist dabei im Rahmen 101 geführt. Das Drehgelenk 104 ist ebenfalls relativ zum Rahmen 101 bewegbar. Das Drehgelenk 104 ist entlang der Hauptausdehnungsrichtung der Flanke 103 bewegbar und dabei im Rahmen 101 geführt. Die Kulisse ist quer dazu angeordnet, so dass die Drehachse aus vorspringenden Bereichen 110 und Kulisse 111 quer zu den Drehgelenken 108 und 104 bewegbar ist.

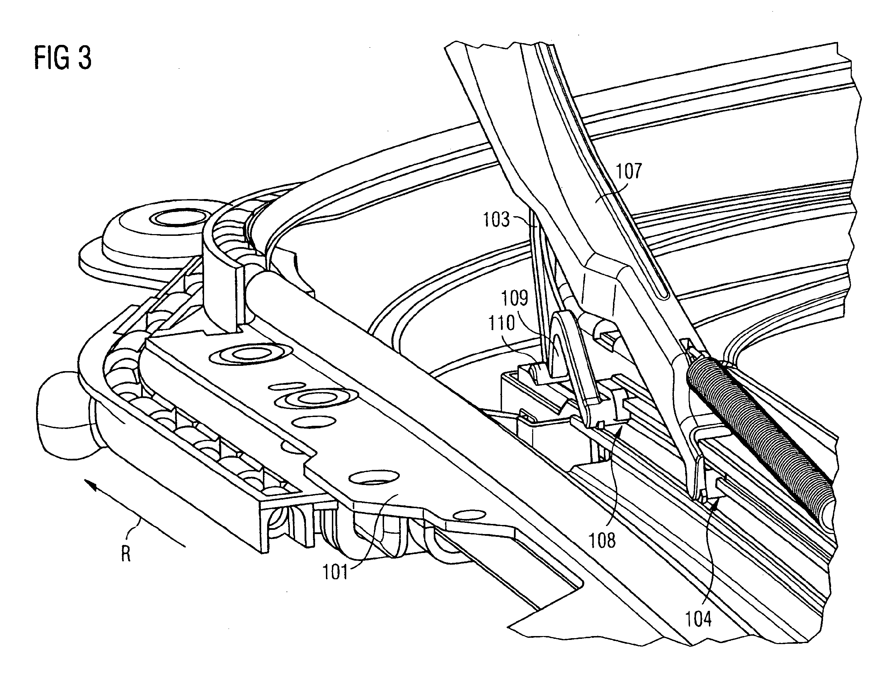

Figur 3 zeigt die Windabweiseranordnung 100 der Figur 1 aus einem weiteren Blickwinkel in etwa in Hauptfahrtrichtung R des Fahrzeugs, wenn die Windabweiseranordnung montiert ist. Der vorspringende Bereich 110 ist in der gezeigten Position des Stützelements 103 nicht in der Kulisse 111 geführt.

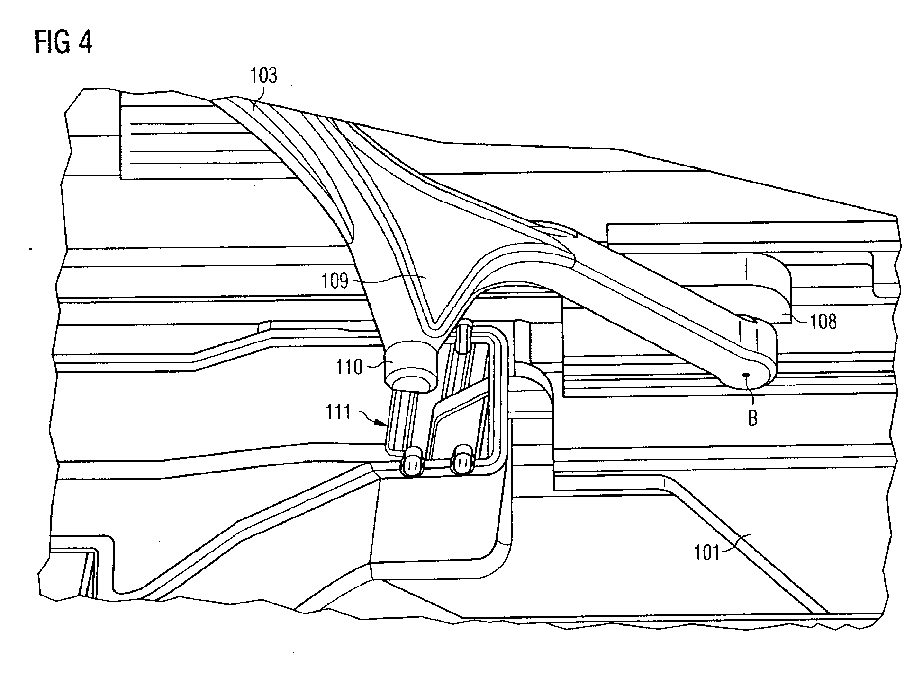

Figur 4 zeigt eine schematische Darstellung eines Ausschnitts der Windabweiseranordnung 100. Die Kulisse 111 ist aus Fugen gebildet, in die der vorspringende Bereich 110 eingreifen kann und von diesen geführt wird. Die Kulisse 111 weist Schlitze beziehungsweise Nuten auf, in denen der vorspringende Bereich 110 geführt wird.

Die Kulisse ist in Richtung des Stützelements 103 offen, so dass der vorspringende Bereich 110 aus Richtung des Stützelements 103 in die Kulisse 111 einkoppelt, wenn sich das Stützelement 103 in Richtung des Rahmens 101 bewegt. Die Kulisse ist so ausgebildet, dass der vorspringende Bereich 110 unterhalb des Drehgelenks 108 angeordnet ist, wenn der Windabweiserbügel in der ersten Position angeordnet ist.

Der Bereich 109 des Stützelements 103 springt so weit über das übrige Stützelement 103 vor, dass der Bereich 110, der am Ende des Bereichs 109 angeordnet ist, weiter von der Flanke 107 beabstandet ist als das Drehgelenk 108. Das Stützelement 103 ist so gestaltet, dass die Drehachse B quer zur Hauptausdehnungsfläche der Dachhaut unterhalb der Drehachse A und der Drehachse C angeordnet ist, wenn der Windabweiserbügel 102 in der ersten Position angeordnet ist.

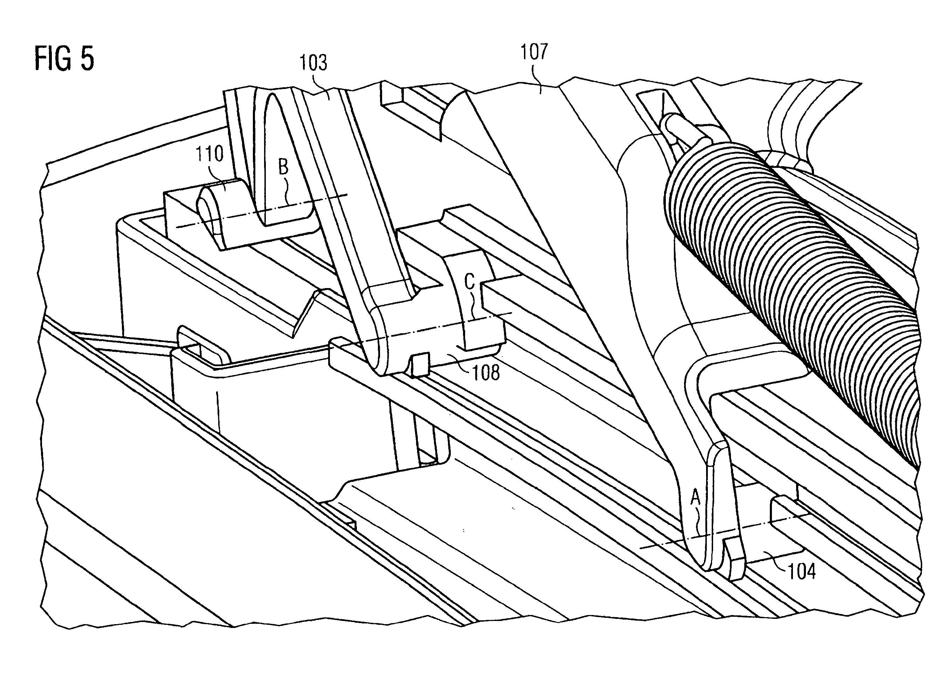

Figur 5 zeigt eine schematische Darstellung des Drehgelenks 108 der Windabweiseranordnung 100. In der gezeigten Position ist der Windabweiserbügel 102 in der zweiten Position relativ zum Rahmen 101.

Das Stützelement 103 und das Drehgelenk 108 sind relativ zum Rahmen 101 in Richtung des Drehgelenks 104 verschoben und an einem Anschlag des Rahmens 101, der die Bewegung des Drehgelenks 108 in Richtung des Drehgelenks 104 begrenzt. Das Drehgelenk 104 ist an einem Anschlag des Rahmens 101, der die Bewegung des Drehgelenks 104 in Richtung weg vom Drehgelenk 108 begrenzt. In Positionen des Windabweiserbügels 102, in der der Windabweiserbügel 102 näher zum Rahmen 101 gedreht ist, beispielsweise in der ersten Position, sind das Drehgelenk 108 und das Drehgelenk 104 jeweils entlang des Rahmens in Richtung R (Figur 1) bewegt und von dem jeweiligen Anschlag des Rahmens 101 beabstandet.

## Patentansprüche

1. Windabweiseranordnung für eine durch eine Abdeckung verschließ- und freigebbare Dachöffnung in einer Dachhaut eines Fahrzeugs, umfassend:
- einen Rahmen (101), der ausgebildet ist, die Dachöffnung zumindest teilweise zu umgeben,
- einen Windabweiserbügel (102), der mit dem Rahmen (101) gekoppelt ist, so dass der Windabweiserbügel (102) um eine erste Drehachse (A) relativ zum Rahmen (101) und der Dachhaut drehbar ist,
- ein Stützelement (103), das mit dem Windabweiserbügel (102) und dem Rahmen (101) gekoppelt ist, so dass das Stützelement (103) während einem ersten Abschnitt einer Bewegung des Windabweiserbügels (102) relativ zu dem Rahmen (101) um eine zweite Drehachse (B) drehbar ist und während einem weiteren Abschnitt der Bewegung um eine dritte Drehachse (C) drehbar ist, die von der zweiten Drehachse (B) verschieden ist, wobei die zweite Drehachse (B) festgelegt ist durch eine Kulisse (111), die an dem Rahmen (101) angeordnet ist, und einen vorspringenden Bereich (110) des Stützelements (103), der in der Kulisse (111) führbar ist, **dadurch gekennzeichnet, dass** die Kulisse (111) in Richtung des Stützelements (103) offen ist, so dass der vorspringende Bereich (110) in die Kulisse (111) aus- und einkoppelbar ist.

2. Windabweiseranordnung nach Anspruch 1, bei der die erste Drehachse (A) festgelegt ist durch mindestens ein Drehgelenk (104), das den Windabweiserbügel (102) und den Rahmen (101) koppelt.

3. Windabweiseranordnung nach Anspruch 1 oder 2, bei der die zweite Drehachse (B) relativ zu dem Rahmen (101) quer zur flächigen Hauptausdehnung der Dachhaut verschiebbar ist.

4. Windabweiseranordnung nach einem der Ansprüche 1 bis 3, bei der die dritte Drehachse (C) festgelegt ist durch mindestens ein Drehgelenk (108).

5. Windabweiseranordnung nach einem der Ansprüche 1 bis 4, bei dem das Stützelement (103) länglich ausgedehnt ist und einen Abschnitt (109) aufweist, der schräg zu der länglichen Ausdehnung des Stützelements (103) hervorspringt.

6. Windabweiseranordnung nach Anspruch 5, bei dem der vorspringende Bereich (110) an dem Abschnitt (109) angeordnet ist.

## Claims

1. Wind deflector arrangement for a roof opening, which can be closed and opened up by means of a cover, in a roof panel of a vehicle, comprising:
- a frame (101) which is designed to at least partially surround the roof opening,
- a wind deflector hoop (102) which is coupled to the frame (101) such that the wind deflector hoop (102) is rotatable relative to the frame (101) and the roof panel about a first axis of rotation (A),
- a support element (103) which is coupled to the wind deflector hoop (102) and to the frame (101) such that the support element (103) can rotate about a second axis of rotation (B) during a first segment of the movement of the wind deflector hoop (102) relative to the frame (101) and can rotate about a third axis of rotation (C), which differs from the second axis of rotation (B), during a further segment of the movement, wherein the second axis of rotation (B) is defined by a slotted guide (111), which is arranged on the frame (101), and a projecting region (110) of the support element (103), which projecting region can be guided in the slotted guide (111), **characterized in that** the slotted guide (111) is open in the direction of the support element (103), such that the projecting region (110) can be coupled out of and into the slotted guide (111).

2. Wind deflector arrangement according to Claim 1, in which the first axis of rotation (A) is defined by at least one rotary joint (104) which couples the wind deflector hoop (102) and the frame (101).

3. Wind deflector arrangement according to Claim 1 or 2, in which the second axis of rotation (B) is displaceable relative to the frame (101) transversely with respect to the areal main extent of the roof panel.

4. Wind deflector arrangement according to one of Claims 1 to 3, in which the third axis of rotation (C) is defined by at least one rotary joint (108).

5. Wind deflector arrangement according to one of Claims 1 to 4, in which the support element (103) is of elongate form and has a portion (109) which protrudes obliquely with respect to the elongate extent of the support element (103).

6. Wind deflector arrangement according to Claim 5, in which the projecting region (110) is arranged on the portion (109).

## Revendications

1. Ensemble déflecteur d'air pour une ouverture de toit, pouvant être fermée et libérée par un recouvrement, dans un panneau de toit d'un véhicule, comportant :
- un cadre (101) qui est réalisé pour entourer au moins partiellement l'ouverture de toit,
- un étrier de déflecteur d'air (102) qui est accouplé au cadre (101) de telle sorte que l'étrier de déflecteur d'air (102) puisse tourner autour d'un premier axe de rotation (A) par rapport au cadre (101) et au panneau de toit,
- un élément de support (103) qui est accouplé à l'étrier de déflecteur d'air (102) et au cadre (101) de telle sorte que l'élément de support (103) puisse, pendant une première partie d'un mouvement de l'étrier de déflecteur d'air (102) par rapport au cadre (101), tourner autour d'un deuxième axe de rotation (B) et puisse, pendant une autre partie du mouvement, tourner autour d'un troisième axe de rotation (C) qui est différent du deuxième axe de rotation (B), le deuxième axe de rotation (B) étant défini par une coulisse (111), qui est disposée sur le cadre (101), et une région saillante (110) de l'élément de support (103), qui peut être guidée dans la coulisse (111), **caractérisé en ce que** la coulisse (111) est ouverte en direction de l'élément de support (103), de telle sorte que la région saillante (110) puisse être désaccouplée de la coulisse (111) et accouplée dans celle-ci.

2. Ensemble déflecteur d'air selon la revendication 1, dans lequel le premier axe de rotation (A) est défini par au moins une articulation rotative (104) qui accouple l'étrier de déflecteur d'air (102) et le cadre (101).

3. Ensemble déflecteur d'air selon la revendication 1 ou 2, dans lequel le deuxième axe de rotation (B) est déplaçable par rapport au cadre (101) transversalement à l'étendue principale plane du panneau de toit.

4. Ensemble déflecteur d'air selon l'une quelconque des revendications 1 à 3, dans lequel le troisième axe de rotation (C) est fixé par au moins une articulation rotative (108).

5. Ensemble déflecteur d'air selon l'une quelconque des revendications 1 à 4, dans lequel l'élément de support (103) s'étend de manière allongée et comprend une section (109) qui fait saillie obliquement par rapport à l'étendue allongée de l'élément de support (103).

6. Ensemble déflecteur d'air selon la revendication 5, dans lequel la région saillante (110) est disposée sur la section (109).
